# EUROPÄISCHE PATENTSCHRIFT

(11) **EP 3 175 281 B1**
(45) Veröffentlichungstag und Bekanntmachung des Hinweises auf die Patenterteilung: **20.05.2026**
(21) Anmeldenummer: 15739303.4
(22) Anmeldetag: 27.07.2015
(51) Int. Cl.: B60K 35/22, B60K 35/23, B60K 35/81, G02B 27/01

(54) **ANZEIGEEINRICHTUNG FÜR EIN KRAFTFAHRZEUG, INSBESONDERE HEAD-UP-DISPLAY**
DISPLAY DEVICE FOR A MOTOR VEHICLE, IN PARTICULAR HEAD-UP DISPLAY
DISPOSITIF D'AFFICHAGE POUR VÉHICULE AUTOMOBILE, EN PARTICULIER AFFICHAGE TÊTE HAUTE

(30) Priorität: 28.07.2014 DE 102014214767
(43) Veröffentlichungstag der Anmeldung: 07.06.2017
(73) Patentinhaber: AUMOVIO Germany GmbH, 60488 Frankfurt am Main (DE)
(72) Erfinder: FINGER, Eckhard, 63739 Aschaffenburg (DE); VON SPIEGEL, Wolff, 61352 Bad Homburg (DE); JAKOBY, Oliver, 63150 Heusenstamm (DE); KLOFT, Michael, 63486 Bruchköbel (DE); KERN, Thorsten Alexander, 64665 Alsbach (DE)
(74) Vertreter: Aumovio Corporation
(86) Internationale Anmeldenummer: PCT/EP2015/067125
(87) Internationale Veröffentlichungsnummer: WO 2016/016174

(56) Entgegenhaltungen:
- EP-A1- 2 282 491
- DE-A1- 19 708 610
- DE-A1- 19 708 610
- JP-A- 2008 213 753
- JP-A- 2008 213 753
- US-A1- 2007 085 708
- US-A1- 2007 085 708
- US-A1- 2012 293 481
- US-A1- 2012 293 481

## Beschreibung

Die Erfindung liegt auf dem Gebiet der Elektronik und ist mit besonderem Vorteil in der Kraftfahrzeugtechnik einsetzbar. Spezieller liegt die Erfindung auf dem Gebiet der Anzeigeeinrichtungen, die insbesondere in der Kraftfahrzeugtechnik, jedoch auch bei anderen Anwendungen unter anderem auch dazu dienen, Informationen gut erkennbar darzustellen.

Für eine universell einsetzbare und komfortable Anzeige ist es beispielsweise möglich, im Rahmen eines tatsächlichen oder virtuellen Bildschirms eine Anzeigefläche darzustellen, auf der bildhafte Repräsentationen von Anzeigeinstrumenten gezeigt werden können. Es ist beispielsweise bereits bekannt, in einer Bildschirmanzeige einen analogen Tachometer mit einem analog bewegbaren Zeiger darzustellen. Üblicherweise ist zu diesem Zweck eine flächenhafte Ansteuerung von Bildschirmsegmenten, insbesondere Bildschirmpunkten, notwendig.

Eine verbreitete Technik dieser Art sieht den Einsatz von TFT-Displays vor, die mit einer geeigneten Hintergrundbeleuchtung versehen werden. Werden zur Hintergrundbeleuchtung die passenden Leuchtquellen, beispielsweise Leuchtdioden mit einer Kollimationseinrichtung eingesetzt, so ist auch die Verwendung derartiger TFT-Displays zur Realisierung von sogenannten Head-up-Displays möglich, bei denen eine Anzeige nach Art einer Projektion auf eine Windschutzscheibe eines Fahrzeugs projiziert bzw. über die Windschutzscheibe oder eine zusätzliche reflektierende Scheibe (Kombiner-Scheibe) zum Auge des Fahrers eingespiegelt wird.

Für eine derartige Anwendung wie auch für ein direkt zu betrachtendes TFT-Display sind jedoch relativ hohe Leuchtstärken, d. h. auch hohe Verlustleistungen von eingesetzten Lichtquellen, beispielsweise Leuchtdioden, notwendig. Besonders bei der Verwendung in einem Fahrzeug ist dabei die aufgewendete Leistung zu minimieren, besonders angesichts der Tatsache, dass nur ein geringer Teil des produzierten Lichts bei Übermittlung eines konkreten Bildes durch den Betrachter wahrnehmbar ist. Beispielsweise werden teilweise bestimmte Polarisationen aus dem Lichtweg herausgefiltert, und durch das durchleuchtete TFT-Display werden üblicherweise die dunklen Bildbereiche weitgehend blockiert.

Außer dem Energieverbrauch spielt auch die Wärmeentwicklung eine wichtige Rolle, da die Temperatur der entsprechenden Elemente der Anzeigeeinrichtung begrenzt werden muss. Besonders im Kraftfahrzeugbereich können ohnehin schon stark variierende Temperaturbedingungen herrschen, so dass besonders bei hohen Außentemperaturen schnell Grenzwerte erreicht werden, die eine Herabregelung der Beleuchtungsleistung erfordern können.

Bisher ist es aus dem Stand der Technik bekannt, möglichst effiziente Leuchtdioden zur Hinterleuchtung einzusetzen, die verschiedenen Polarisationskomponenten optimiert zu nutzen und die Helligkeit der Hinterleuchtung abhängig vom Umgebungslicht, diverser Systemtemperaturen und individueller Benutzereinstellungen zu regeln.

Aus DE 102 12 600 B4 ist eine Anzeigeeinrichtung gemäß Oberbegriff des Anspruchs 1 bekannt.

Der vorliegenden Erfindung liegt vor dem Hintergrund des Standes der Technik die Aufgabe zugrunde, eine Anzeigeeinrichtung, beispielsweise für ein Kraftfahrzeug, zu schaffen, die eine möglichst effiziente und energieverbrauchsarme Verwendung von Beleuchtungselementen zur Durchleuchtung einer Bildschirmmatrix erlaubt.

Die Aufgabe wird mit den Merkmalen der Erfindung gemäß Patentanspruch 1 gelöst. Die Unteransprüche 2 bis 6 geben vorteilhafte Ausgestaltungen der Erfindung an. Den Verfahrensansprüchen 7 und 8 sind erfindungsgemäße Lösungen im Rahmen von Betriebsverfahren zu entnehmen.

Die Erfindung bezieht sich somit konkret auf eine Anzeigeeinrichtung für ein Kraftfahrzeug, insbesondere ein Head-up-Display, mit einer Bildschirmmatrix und einer eine Mehrzahl von Leuchtelementen aufweisenden Beleuchtungsmatrix zur wenigstens teilweisen Durchleuchtung der Bildschirmmatrix und mit einer Steuerungseinrichtung für die Beleuchtungsmatrix.

Die Aufgabe wird erfindungsgemäß gelöst durch ein oder mehrere in einer Speichereinrichtung gespeicherte Beleuchtungsmuster zur selektiven und unterschiedlichen Ansteuerung der Leuchtelemente in Abhängigkeit von Klassen von anzuzeigenden Bildern.

Der Erfindung liegt die Erkenntnis zugrunde, dass viele im Rahmen einer Anzeigeeinrichtung anzuzeigende Bilder einerseits relativ große dunkle Flächenbereiche aufweisen und andererseits die Anzeigebilder in Gruppen oder sogenannte Klassen aufteilbar sind, wobei sich die Bilder innerhalb einer Klasse nur in geringem Maße unterscheiden. Beispielsweise kann bei der Anzeige eines Tachometers in einem Head-up-Display die Geschwindigkeitsskala bei der Anzeige verschiedener Geschwindigkeiten gleich bleiben, wobei nur die Zeigerstellung sich von Bild zu Bild dieser Klasse von Bildern ändert. Viele Bereiche, beispielsweise bei einer kreisringförmigen Tachometeranzeige außerhalb und innerhalb der Geschwindigkeitsskala, können beispielsweise dunkel bleiben, und die eigentliche Anzeige ändert sich innerhalb der Klasse nur durch die Stellung der Tachometernadel, also des Geschwindigkeitsanzeigers. Die entsprechenden Anzeigen können somit zu einer Klasse von anzuzeigenden Bildern zusammengefasst werden, wobei bei einer derartigen Klasse die Beleuchtungsstärkeverteilung der Beleuchtungsmatrix, die im Rahmen des vorliegenden Textes auch als Beleuchtungsmuster bezeichnet wird, jeweils gleich sein kann. Eine solche Beleuchtungsstärkeverteilung sieht vor, dass bestimmte Leuchtelemente der Beleuchtungsmatrix dort dunkel bleiben, wo bei dem anzuzeigenden Bild dunkle Bereiche vorzusehen sind. Bestimmte Bildbereiche der Beleuchtungsmatrix sind dabei eineindeutig entsprechenden Bereichen der Bildschirmmatrix zugeordnet. Es kann dabei eine Differenzierung zwischen hellen und dunklen Bereichen bzw. hellen und schwarzen Bereichen vorgenommen werden, es können jedoch auch mehr als zwei Helligkeitsstufen bei der Ansteuerung der einzelnen Leuchtelemente in Betracht gezogen werden. Wichtig ist in diesem Zusammenhang, dass zu einer Klasse von Anzeigebildern jeweils eine Beleuchtungsstärkeverteilung das heißt ein Beleuchtungsmuster oder ein Ansteuerungsmuster der einzelnen Leuchtelemente, vorgesehen und abgespeichert ist und von der Steuerungseinrichtung der Beleuchtungsmatrix abgerufen werden kann.

Ein anzuzeigendes Bild kann dabei auch mehr als ein Anzeigeinstrument umfassen. Die Anzeigeeinrichtung kann grundsätzlich verschiedene Anzeigeoptionen zulassen, so dass durch einen Nutzer zwischen verschiedenen Anzeigebildern umgeschaltet werden kann, wenn z. B. die zu erfassende Messgrößen in unterschiedlichen Maßsystemen angezeigt werden sollen, beispielsweise bei Umstellung eines Geschwindigkeitsmessers von Kilometern pro Stunde auf Meilen pro Stunde. Zudem ist auch eine Umstellung auf andere anzuzeigende Messgrößen, wie beispielsweise bei einem Kraftfahrzeug die Drehzahl oder die Temperatur, grundsätzlich möglich. Bei einer solchen Umschaltung der Anzeige wird von der Steuerungseinrichtung überprüft, welcher Klasse von anzuzeigenden Bildern das darzustellende Bild angehört, und es wird aus der Speichereinrichtung das entsprechende Beleuchtungsmuster für die Leuchtelemente aufgerufen und angewendet.

Damit kann erreicht werden, dass die Leuchtintensität der einzelnen Leuchtelemente der Bildschirmmatrix auf das für eine spezifische Klasse notwendige Minimum reduziert werden kann, so dass sowohl die Leistungsaufnahme als auch der Beitrag zu einer Temperaturerhöhung begrenzt werden kann. Dies ist insbesondere dadurch möglich, dass die Beleuchtungsmatrix aus einzeln ansteuerbaren Leuchtelementen aufgebaut ist.

Erfindungsgemäß ist eine mit der Steuerungseinrichtung der Beleuchtungsmatrix verbundene Strommesseinrichtung zur Erfassung der Leistungsaufnahme der Beleuchtungsmatrix der Anzeigeeinrichtung vorhanden, wobei die Steuerungseinrichtung als regelbare Stromquelle mit einzelnen Steuerungskanälen für jedes Leuchtmittel in der Beleuchtungsmatrix ausgebildet ist. Erfindungsgemäß wird, je nach der Notwendigkeit, elektrische Leistung einzusparen, die Energiezufuhr und der Energieverbrauch der Beleuchtungsmatrix reduziert, indem die absolute Beleuchtungsintensität oder die Zahl der betriebenen Beleuchtungselemente reduziert werden. Diese Anwendung ist ebenso wie die Berücksichtigung der Umgebungstemperatur besonders bei Benutzung der Erfindung im Umfeld von Kraftfahrzeugen sinnvoll und wichtig.

Dabei sind vorteilhaft die Klassen von Bildern derart eingeteilt, dass jeweils eine Klasse von Bildern im Wesentlichen dieselben schwarzen Bereiche oder dunklen Bereiche aufweist.

Weiterhin kann vorteilhaft vorgesehen sein, dass innerhalb einer Klasse von Bildern wenigstens 70 %, insbesondere 90 % der schwarzen Flächen zwischen verschiedenen Bildern deckungsgleich sind. Damit kann sichergestellt werden, dass beim Übergang von einem Bild zu einem anderen Bild derselben Klasse gar keine oder ausnahmsweise nur wenige zusätzliche Schwarzbereiche angezeigt werden müssen, für die das Licht, das durch die Beleuchtungsmatrix erzeugt wird, problemlos durch die Bildschirmmatrix blockiert werden kann, ohne dass zu viel Verlustwärme oder elektrische Verlustleistung entsteht. Bei einer überwiegenden Übereinstimmung der Schwarzbereiche kann die Anzahl der zu betreibenden Leuchtelemente signifikant reduziert werden, oder es kann für eine hohe Anzahl von Leuchtelementen die Beleuchtungsstärke ausreichend herunter geregelt werden, um Wärmeeintrag und Leistungsaufnahme zu begrenzen.

Beispielsweise kann bei einer Klasse von Bildern, die ein Anzeigeinstrument mit einer beweglichen Zeigernadel darstellen, der Bereich hinterleuchtet werden, den die bewegte Anzeigenadel maximal überstreichen kann. In diesem Bereich wird dann durch die Bildschirmmatrix Licht lediglich in dem Bereich, in dem der Zeiger aktuell anzuzeigen ist, durchgelassen, während in den übrigen Bereichen, in denen der Zeiger/die Anzeigenadel sich potentiell bewegen kann, das durch die Beleuchtungsmatrix erzeugte Licht durch die Bildschirmmatrix blockiert wird.

Vorteilhaft kann bei der Ausgestaltung der Erfindung vorgesehen sein, dass eine Mehrzahl von Applikationen vorgesehen ist, die jeweils der Darstellung verschiedener Anzeigeinstrumente oder Kombinationen von Anzeigeinstrumenten entsprechen.

Eine Klasse von Bildern kann dabei jeweils einer Applikation der Anzeigeeinrichtung zugeordnet sein, beispielsweise der Applikation, ein Tachometer anzuzeigen. Verschiedene Anzeigestände des Tachometers, die üblicherweise durch verschiedene Zeigerstände einer Zeigernadel auf einer Skala repräsentiert sind, erfordern dabei üblicherweise eine farbige Anzeige in demselben Bildbereich, wobei die Skala selbst konstant bleibt und nur die Position der Zeigernadel sich verändert. Dabei kann dann die Beleuchtungsmatrix derart angesteuert werden, dass der Bereich des Bildes, der die Skala und den überstrichenen Bereich der Zeigernadel enthält, in dem entsprechenden Bereich der Bildschirmmatrix durchleuchtet wird und andere Bereiche der Anzeige dunkel bleiben. Die entsprechend dunkel bleibenden Bereiche der Anzeige werden dann auch durch die Beleuchtungsmatrix nicht ausgeleuchtet.

Anstelle eines Tachometers kann auch ein anderes Anzeigeinstrument, beispielsweise eine analoge Uhr, angezeigt werden, wobei auch dort die Bereiche der Anzeige von der Beleuchtungsmatrix beleuchtet werden, die die Uhrenskala und den von dem Stunden- und Minutenzeiger überstrichenen Bereich betreffen. Letztlich können auch mehrere Anzeigeinstrumente gleichzeitig in der Anzeigeeinrichtung dargestellt werden. In diesem Fall ist das Beleuchtungsmuster der Beleuchtungsmatrix entsprechend komplexer aufgebaut.

Die Beleuchtungsmuster der Beleuchtungsmatrix, die den einzelnen Applikationen oder Applikationsbildern zugeordnet sind, können vorher berechnet, den einzelnen Applikationen zugeordnet und in einer Speichereinrichtung gespeichert werden.

Es ist jedoch auch möglich, die benötigte Verteilung der Beleuchtungsdichte auf der Bildschirmmatrix für eine Applikation in Echtzeit aus vorberechneten und abgespeicherten Teilbildern zu berechnen und entsprechend anzuwenden.

Dies ist insbesondere dann vorteilhaft, wenn die Anordnung von Anzeigen auf der Anzeigeeinrichtung vom Nutzer in gewissem Umfang gestaltet werden kann, beispielsweise durch Vergrößerung bestimmter Anzeigen oder eine Auswahl bei der Anordnung verschiedener Darstellungen auf einem Bildschirm.

In diesem Fall kann das Muster der Bildschirmmatrix genutzt werden, um hieraus die notwendige Beleuchtungsdichte und daraus die Verteilung der anzusteuernden Beleuchtungselemente der Beleuchtungsmatrix zu berechnen. Da die entsprechenden Applikationsbilder nicht schnell wechseln, kann eine solche Berechnung während der Nutzung der Anzeigeeinrichtung einmalig durchgeführt und danach angewendet werden. In dem Zeitraum, der von der Inbetriebnahme der Anzeigeeinrichtung bis zur Berechnung der benötigten Beleuchtungsmuster vergeht, kann die Anzeigeeinrichtung mit voll eingeschalteter Beleuchtungsmatrix betrieben werden.

Eine vorteilhafte Ausgestaltung der Erfindung sieht vor, dass eine Temperaturmesseinrichtung vorhanden ist, die mit der Steuerungseinrichtung der Beleuchtungsmatrix verbunden ist. In diesem Fall kann die Gestaltung der Beleuchtungsmuster, die bei bestimmten Applikationsbildern angewendet werden, von der Umgebungstemperatur und/oder von der Temperatur der Beleuchtungsmatrix abhängig gemacht werden. Damit kann sichergestellt werden, dass bei bestimmten Temperaturbedingungen, beispielsweise und insbesondere bei hohen Umgebungstemperaturen, das Muster der betriebenen Beleuchtungselemente der Beleuchtungsmatrix minimiert wird und/oder die Beleuchtungsintensität der entsprechenden Beleuchtungselemente auf ein Minimum reduziert wird.

Beispielsweise kann die Steuerungseinrichtung für die Beleuchtungsmatrix bei der Überschreitung bestimmter Temperaturschwellen zu Sparmodi mit immer weiter reduzierten Beleuchtungsstärken und flächenmäßig reduzierten Beleuchtungsmustern wechseln. Es können auch bestimmte anzuzeigende Bildteile auf der Anzeigeeinrichtung durch Abschalten der entsprechenden Beleuchtungselemente abgeschaltet werden, sofern die entsprechenden Anzeigen als verzichtbar eingestuft werden können.

Dies könnte beispielsweise dazu führen, dass bei hohen Umgebungstemperaturen der Tachometer weiterhin angezeigt wird, während ein Drehzahlmesser oder ein Tankanzeiger bei der Anzeigeeinrichtung durch Abschalten bestimmter Beleuchtungselemente abgeschaltet werden.

Die Erfindung bezieht sich außer auf eine Anzeigeeinrichtung der oben beschriebenen Art auch auf ein Verfahren zur Steuerung einer Anzeigeeinrichtung. Bei diesem ist es erfindungsgemäß vorgesehen, dass in der Steuerungseinrichtung für die Beleuchtungsmatrix der Klasse der anzuzeigenden Bilder ein Beleuchtungsmuster zugeordnet und die Beleuchtungsmatrix gemäß dem Beleuchtungsmuster angesteuert wird.

Zudem kann vorteilhaft vorgesehen sein, dass bei der Ansteuerung der Beleuchtungsmatrix die durch die Temperaturmesseinrichtung erfasste Temperatur berücksichtigt wird.

Erfindungsgemäß ist vorgesehen, dass bei der Ansteuerung der Beleuchtungsmatrix die durch die Strommesseinrichtung erfasste Leistungsaufnahme der Anzeigeeinrichtung, insbesondere der Beleuchtungsmatrix, berücksichtigt wird.

Im Folgenden wird die Erfindung anhand von Ausführungsbeispielen in Figuren einer Zeichnung gezeigt und nachfolgend erläutert. Dabei zeigt:
- Fig. 1: schematisch in einer Seitenansicht ein Fahrzeug mit einem Fahrer und einem schematisch dargestellten Head-up-Display,
- Fig. 2: eine Bildschirmanzeige mit einem Tachometer, einem Thermometer und einer Tankanzeige,
- Fig. 3: eine Bildschirmanzeige wie in Figur 2 mit einem anderen angezeigten Geschwindigkeitswert,
- Fig. 4: ein reales Applikationsbild einer Bildschirmanzeige,
- Fig. 5: in einer perspektivischen Darstellung das Applikationsbild aus Figur 4 und die hierfür notwendige Leuchtdichteverteilung sowie das notwenige Beleuchtungsmuster der Beleuchtungsmatrix und
- Fig. 6: schematisch den technischen Aufbau des Head-up-Displays.

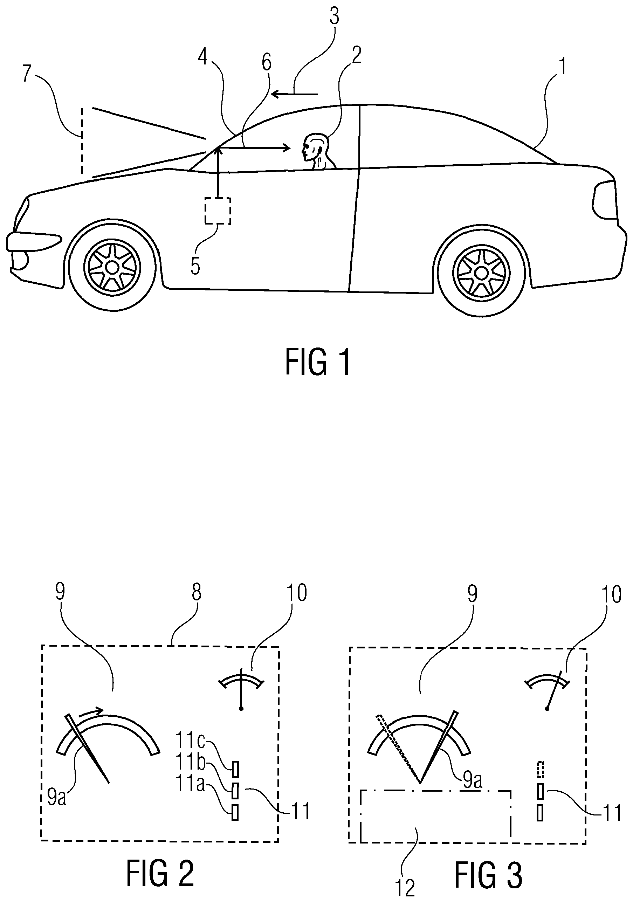

Figur 1 zeigt in einer Seitenansicht ein Kraftfahrzeug 1 mit einem Fahrer 2, der in Fahrtrichtung 3 blickt und der durch eine Windschutzscheibe 4 hindurchschaut. Außer seiner Umgebung sieht der Fahrer 2 beim Blick in Richtung der Windschutzscheibe 4 zudem ein Bild, das ihm von einer Anzeigeeinrichtung 5 in Form eines Head-up-Displays über die Windschutzscheibe 4 eingespiegelt wird, was durch den Pfeil 6 dargestellt ist. Dem Fahrer 2 stellt sich ein virtuelles Bild in der Bildebene 7 dar, die von ihm aus gesehen hinter der Windschutzscheibe über der Motorhaube des Fahrzeugs liegt. Die Bildebene kann grundsätzlich auch vom Fahrer aus gesehen vor der Windschutzscheibe liegen. Das virtuelle Bild in der Bildebene 7 überlagert sich damit den Bildern, die der Fahrer von seiner Umgebung durch die Windschutzscheibe wahrnimmt.

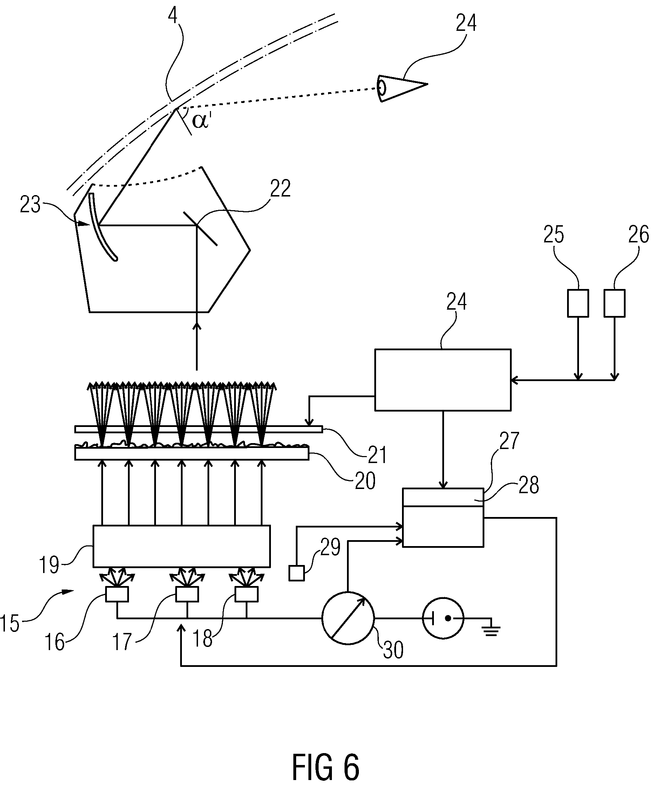

Um ein Bild über die Windschutzscheibe 4 zum Fahrer 2 hin einspiegeln zu können, weist die Anzeigeeinrichtung 5 eine projektorähnliche Einrichtung auf, die Lichtstrahlen von einer Leuchtquelle in Richtung zur Windschutzscheibe hin lenkt. Der Aufbau der projektorartigen Einrichtung ist in Figur 6 näher gezeigt und weiter unten genauer erläutert.

Ein Head-up-Display, wie es schematisch anhand der Figur 1 beschrieben ist, erlaubt dem Fahrer eines Kraftfahrzeugs, ohne den Blick von der in Fahrtrichtung liegenden Umgebung abzuwenden, gleichzeitig Informationen aufzunehmen, die ihm über das Head-up-Display in derselben Blickrichtung zur Verfügung gestellt werden.

In Figur 2 ist ein Beispiel für einen Bildschirminhalt einer erfindungsgemäßen Anzeigevorrichtung gezeigt, wobei der Bildschirm durch eine gestrichelte Linie 8 begrenzt ist. Innerhalb des Bildschirms ist eine Tachometeranzeige 9, eine Thermometeranzeige 10 zur Anzeige beispielsweise der Temperatur von Motoröl und eine Tankanzeige 11 mit drei Leuchtfeldern 11a, 11b, 11c angeordnet. Die dargestellten Instrumente 9, 10, 11 sind auf einem dunklen Hintergrund leuchtend und in einer oder mehreren Farben dargestellt.

In Figur 3 sind dieselben Anzeigeelemente auf einem Bildschirm in derselben Art angeordnet wie bereits anhand der Figur 2 dargestellt, wobei jedoch die angezeigte Geschwindigkeit des Tachometers 9 eine andere ist, so dass der Zeiger 9a sich in einer anderen Position befindet als in Figur 2. Die Position, die der Zeiger 9a in Figur 2 eingenommen hat, ist in Figur 3 gestrichelt dargestellt.

Die Beleuchtung des Bildes sollte derart gestaltet sein, dass der Geschwindigkeitszeiger 9a sowohl in der in Figur 2 dargestellten Position als auch in der in Figur 3 dargestellten Position gut ausgeleuchtet werden kann. Beispielsweise ist es, um die drei Anzeigeelemente aus den Figuren 2 und 3 anzeigen zu können, sinnvoll, dass die Flächenbereiche einer Bildschirmmatrix, die durch die Skalen vorgegeben werden, großzügig durch eine Beleuchtungsmatrix beleuchtet werden. Andere Flächen, wie beispielsweise die in Figur 3 unterhalb des Tachometers 9 strichpunktiert dargestellte Fläche 12, können dagegen unbeleuchtet bleiben, da dort in keiner Variante von Bildern dieser Klasse ein Bildelement durch Beleuchtung angezeigt werden muss.

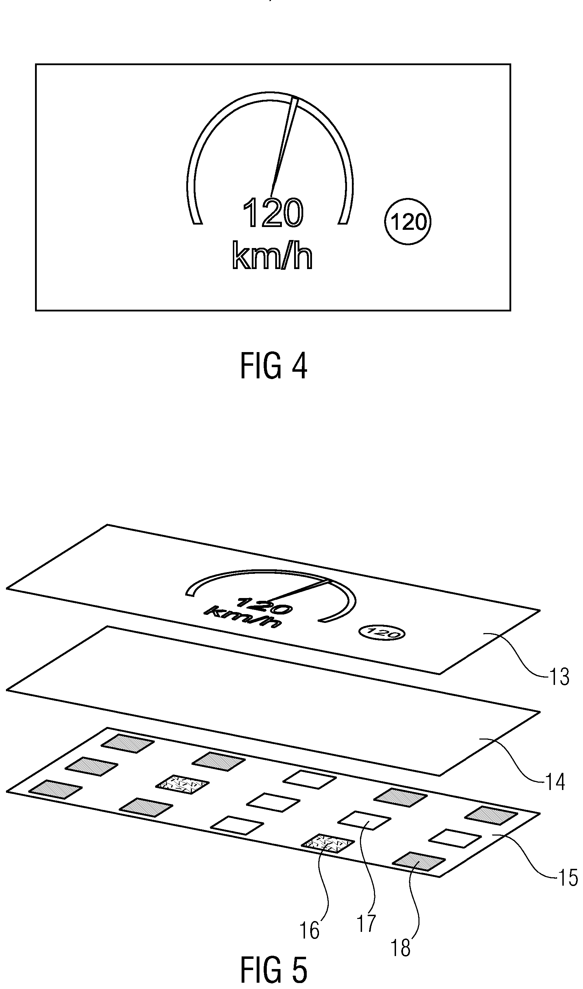

Figur 4 zeigt als Beispiel einen realistischen Bildschirminhalt in Form eines kombinierten analogen und digitalen Tachometers, bei dem eine Skala, ein Zeiger und eine digitale Zahlanzeige in Form von heller Schrift auf dunklem Untergrund gezeigt wird, sowie ein Anzeigefeld, dessen Hintergrund hell ist und bei dem vor dem hellen Hintergrund in schwarzer Schrift ein Text angezeigt wird, sowie ein Textfeld (in Figur 4 mit dem Wort "Testtext" belegt), bei dem in heller Schrift auf dunklem Untergrund ein Text angezeigt werden kann.

Figur 5 zeigt hierzu in drei Schichten perspektivisch dargestellt die eigentliche Bildschirmanzeige 13, darunter die sinnvolle Verteilung der Bildschirmausleuchtung 14, die es ermöglicht, die entsprechenden die Bildinformationen darstellenden Segmente der Bildschirmmatrix ausreichend zu beleuchten, und schließlich in der Ebene unterhalb der Bildschirmausleuchtung 14 die Beleuchtungsmatrix 15, in der fünfzehn einzelne Beleuchtungselemente 16, 17, 18 dargestellt sind, die jeweils verschiedene Beleuchtungsintensitäten liefern. Dabei wird beispielsweise ein erstes Beleuchtungselement 16 mit mittlerer Beleuchtungsstärke betrieben, ein zweites Beleuchtungselement 17 mit hoher Beleuchtungsstärke, und ein drittes Beleuchtungselement 18 bleibt dunkel. Insgesamt ergibt das Muster der beispielhaft dargestellten fünfzehn Beleuchtungselemente der Beleuchtungsmatrix 15 bei der Beleuchtung der Bildschirmmatrix die in der mittleren Ebene dargestellte Beleuchtungsstärkeverteilung 14. Die Beleuchtungselemente 16, 17, 18 sind innerhalb der Beleuchtungsmatrix einzeln durch eine Steuervorrichtung ansteuerbar.

Figur 6 zeigt schematisch ein Head-up-Display, bei dem Licht von einzelnen Beleuchtungselementen 16, 17, 18 in Form von Leuchtdioden durch eine Kollimatoreinheit 19 hindurch zu einer Mattscheibe 20 geleitet wird und von dort aus Elemente einer Bildschirmmatrix 21 mehr oder weniger stark beleuchtet bzw. durchleuchtet. Die optische Bildinformation wird von der Bildschirmmatrix 21 aus zu einem optionalen Spiegelsystem 22 gestrahlt und von dort zu einer Abbildungsoptik 23 reflektiert, die eine Windschutzscheibe 4 enthalten kann und von dort zum Auge 24 des Fahrers 2 reflektiert.

Der Kollimator 19 weist eine Kollimationsoptik auf, die aus den divergenten Strahlen, die durch die einzelnen Leuchtdioden 16, 17, 18 ausgesandt werden, im Wesentlichen gebündelte Lichtstrahlen macht, die zur Mattscheibe 20 geleitet werden. Durch die Mattscheibe 20 werden Segmente einer Bildschirmmatrix 21 hinterleuchtet und durchleuchtet, wobei die einzelnen Segmente der Bildschirmmatrix transparente, ggf. farblich eingefärbte Bildschirmpixel oder Anzeigesegmente sind, durch die jeweils nur Licht einer gewünschten Farbe durchgelassen wird. Hierdurch entsteht das gewünschte Bildmuster und damit die Bildanzeige. Bereiche, die bei der Bildanzeige dunkel bleiben sollen, werden in der Bildschirmmatrix 21 mit der Farbinformation "schwarz" angesteuert, d. h., das dort einfallende Licht wird blockiert. Deshalb ist es im Rahmen der Erfindung sinnvoll, die schwarzen Bildschirmbereiche im Bereich der Bildschirmmatrix 21 nicht unnötig mit Licht von den Leuchtdioden 16, 17, 18 zu beaufschlagen.

Die segmentweise bzw. bildschirmpixelweise Ansteuerung der Bildschirmmatrix 21 geschieht durch die Bildschirmsteuerungseinrichtung 24, der die anzuzeigenden Informationen von Sensoren 25 oder einer Bilderzeugungseinrichtung zugeleitet werden. Die Art der Anzeige kann durch ein Interface 26 durch den Nutzer mitgestaltet werden, indem er beispielsweise Farben auswählt, Anzeigeinhalte zu- oder abschaltet oder vergrößert, verkleinert oder umordnet.

Die Bildschirmsteuerungseinrichtung 24 gibt die Information über die notwendige Beleuchtungsstärkeverteilung oder eine grundsätzliche Information über die Natur des anzuzeigenden Bildes an die Steuerungsvorrichtung 27, die beispielsweise eine Speichereinrichtung 28 aufweist, in der den verwendeten Bildschirminhalten entsprechende vorabgespeicherte Beleuchtungsmuster enthalten sind, die abgerufen und an die Beleuchtungsmatrix 15 zu deren Ansteuerung weitergegeben werden können.

Die Steuerungseinrichtung 27 für die Beleuchtungsmatrix empfängt zudem Informationen von einem Temperatursensor 29 und von einem Stromsensor 30, wobei der Temperatursensor 29 die Umgebungstemperatur der Beleuchtungsmatrix erfasst und der Stromsensor 30 die Stromaufnahme durch die Beleuchtungselemente 16, 17, 18. Der Stromsensor 30 ist dazu in die Speiseleitung der Beleuchtungselemente eingefügt.

Die erfindungsgemäße Gestaltung der Anzeigeeinrichtung und ihres Betriebsverfahrens erlaubt einen zuverlässigen Betrieb eines Head-up-Displays auch unter widrigen Temperaturbedingungen und mit möglichst geringem elektrischem Energiebedarf.

## Patentansprüche

1. Anzeigeeinrichtung (5) für ein Kraftfahrzeug (1), mit einer Bildschirmmatrix (21) welche hinterleuchtbar ist und eingerichtet ist, Licht durchzulassen oder zu blockieren, und mit einer Bildschirmsteuerungseinrichtung (24) für die Bildschirmmatrix (21), und einer eine Mehrzahl von Leuchtelementen (16, 17, 18) aufweisenden Beleuchtungsmatrix (15) zur wenigstens teilweisen Durchleuchtung der Bildschirmmatrix (21) und mit einer Steuerungseinrichtung (27) für die Beleuchtungsmatrix (15), aufweisend eine Speichereinrichtung (28) in der ein oder mehrere Beleuchtungsmuster gespeichert sind,
wobei die Bildschirmsteuerungseinrichtung (24) eingerichtet ist, eine Information über ein notwendiges Beleuchtungsmuster oder eine grundsätzliche Information über die Natur des anzuzeigenden Bildes an die Steuerungseinrichtung (27) weiterzugeben, und
wobei die Steuerungseinrichtung (27) eingerichtet ist,
dieser Information entsprechend Beleuchtungsmuster aus der Speichereinrichtung (28) abzurufen und die Leuchtelemente (16, 17, 18) der Beleuchtungsmatrix (15) selektiv und unterschiedlich in Abhängigkeit von Klassen von anzuzeigenden Bildern anzusteuern, **dadurch gekennzeichnet, dass** in der Steuerungseinrichtung für die Beleuchtungsmatrix der Klasse der anzuzeigenden Bilder ein Beleuchtungsmuster zugeordnet und die Beleuchtungsmatrix gemäß dem Beleuchtungsmuster angesteuert wird, und dass eine mit der Steuerungseinrichtung (27) der Beleuchtungsmatrix (15) verbundene Strommesseinrichtung (30) zur Erfassung der Leistungsaufnahme der Beleuchtungsmatrix (15) der Anzeigeeinrichtung (5) vorhanden ist, wobei die Steuerungseinrichtung als regelbare Stromquelle mit einzelnen Steuerungskanälen für jedes Leuchtmittel in der Beleuchtungsmatrix (15) ausgebildet ist, und wobei die Steuerungseinrichtung eingerichtet ist, je nach der Notwendigkeit, elektrische Leistung einzusparen, die Energiezufuhr und den Energieverbrauch der Beleuchtungsmatrix zu reduzieren, indem die absolute Beleuchtungsintensität oder die Zahl der betriebenen Beleuchtungselemente reduziert werden.

2. Anzeigeeinrichtung nach Anspruch 1, **dadurch gekennzeichnet , dass** eine Klasse von Bildern jeweils im Wesentlichen dieselben dunklen und/oder schwarzen Bildbereiche (12) aufweist.

3. Anzeigeeinrichtung nach Anspruch 2, **dadurch gekennzeichnet, dass** innerhalb einer Klasse von Bildern wenigstens 70 %, insbesondere 90 % der schwarzen Flächen zwischen verschiedenen Bildern deckungsgleich sind.

4. Anzeigeeinrichtung nach Anspruch 1 oder einem der folgenden, **dadurch gekennzeichnet, dass** jeweils eine Klasse von Bildern einer Applikation der Anzeigeeinrichtung zugeordnet ist.

5. Anzeigeeinrichtung nach Anspruch 4, **dadurch gekennzeichnet, dass** eine Mehrzahl von Applikationen vorgesehen ist, die jeweils der Darstellung verschiedener Anzeigeinstrumente (9, 10, 11) oder Kombinationen von Anzeigeinstrumenten (9, 10, 11) entsprechen.

6. Anzeigeeinrichtung nach Anspruch 1 oder einem der folgenden, **gekennzeichnet durch** eine Temperaturmesseinrichtung (29), die mit der Steuerungseinrichtung (27) der Beleuchtungsmatrix (15) verbunden ist.

7. Verfahren zur Steuerung einer Anzeigeeinrichtung gemäß Anspruch 1 oder einem der folgenden, **dadurch gekennzeichnet, dass** in der Steuerungseinrichtung (27) der Beleuchtungsmatrix (15) der Klasse der anzuzeigenden Bilder ein Beleuchtungsmuster zugeordnet und die Beleuchtungsmatrix gemäß dem Beleuchtungsmuster angesteuert wird, und dass bei der Ansteuerung der Beleuchtungsmatrix (15) die durch die Strommesseinrichtung (30) erfasste Leistungsaufnahme der Beleuchtungsmatrix (15) der Anzeigeeinrichtung (5) berücksichtigt wird.

8. Verfahren nach Anspruch 7, **dadurch gekenn- zeichnet**, dass bei der Ansteuerung der Beleuchtungsmatrix (15) die durch die Temperaturmesseinrichtung (29) erfasste Temperatur berücksichtigt wird.

## Claims

1. A display apparatus (5) for a motor vehicle (1) with a screen matrix (21), which can be backlit and is configured to allow light through or to block it, and with a screen control apparatus (24) for the screen matrix (21), and an illumination matrix (15) having a plurality of luminous elements (16, 17, 18) for the at least partial transillumination of the screen matrix (21) and with a control apparatus (27) for the illumination matrix (15), having a storage apparatus (28) in which one or more illumination patterns are stored,
wherein the screen control apparatus (24) is configured to pass on information about a necessary illumination pattern or fundamental information about the nature of the image to be displayed to the control apparatus (27), and
wherein the control apparatus (27) is configured to, in accordance with said information, retrieve illumination patterns from the storage apparatus (28) and control the luminous elements (16, 17, 18) of the illumination matrix (15) selectively and differently as a function of classes of images to be displayed, **characterised in that** an illumination pattern is assigned to the class of the images to be displayed in the control apparatus for the illumination matrix and the illumination matrix is controlled according to the illumination pattern, and **in that** a current measuring apparatus (30) connected to the control apparatus (27) of the illumination matrix (15) is present for detecting the power consumption of the illumination matrix (15) of the display apparatus (5), wherein the control apparatus is designed as a controllable current source with individual control channels for each luminous means in the illumination matrix (15), and wherein the control apparatus is configured, depending on the necessity to save electrical power, to reduce the energy supply and the energy consumption of the illumination matrix, by the absolute illumination intensity or the number of operated illumination elements being reduced.

2. The display apparatus according to claim 1, **characterised in that** a class of images in each case has essentially the same dark and/or black image regions (12).

3. The display apparatus according to claim 2, **characterised in that** within a class of images at least 70 %, in particular 90 % of the black areas between different images are congruent.

4. The display apparatus according to claim 1 or one of the following, **characterised in that** in each case a class of images is assigned to an application of the display apparatus.

5. The display apparatus according to claim 4, **characterised in that** a plurality of applications is provided, which in each case correspond to the representation of different display instruments (9, 10, 11) or combinations of display instruments (9, 10, 11).

6. The display apparatus according to claim 1 or one of the following, **characterised by** a temperature measuring apparatus (29) which is connected to the control apparatus (27) of the illumination matrix (15).

7. A method for controlling a display apparatus according to claim 1 or one of the following, **characterised in that** an illumination pattern is assigned to the class of the images to be displayed in the control apparatus (27) of the illumination matrix (15) and the illumination matrix is controlled according to the illumination pattern, and **in that** the power consumption of the illumination matrix (15) of the display apparatus (5) detected by the current measuring apparatus (30) is taken into account during the control of the illumination matrix (15).

8. The method according to claim 7, **characterised in that** the temperature detected by the temperature measuring apparatus (29) is taken into account during the control of the illumination matrix (15).

## Revendications

1. Dispositif d'affichage (5) pour un véhicule automobile (1), comprenant une matrice d'écran (21) qui peut être rétroéclairée et qui est configurée pour laisser passer la lumière ou la bloquer, et comprenant un dispositif de commande d'écran (24) pour la matrice d'écran (21), et une matrice d'éclairage (15) présentant une pluralité d'éléments lumineux (16, 17, 18) pour l'illumination au moins partielle de la matrice d'écran (21), et comprenant un dispositif de commande (27) pour la matrice d'éclairage (15), présentant un dispositif de mémoire (28) dans lequel un ou plusieurs motifs d'éclairage sont mémorisés,
dans lequel le dispositif de commande d'écran (24) est configuré pour transmettre au dispositif de commande (27) une information relative à un motif d'éclairage nécessaire ou une information de nature générale relative à la nature de l'image à afficher, et
dans lequel le dispositif de commande (27) est configuré pour, en fonction de cette information, extraire des motifs d'éclairage à partir du dispositif de mémoire (28) et pour commander les éléments lumineux (16, 17, 18) de la matrice d'éclairage (15) de manière sélective et différenciée en fonction de classes d'images à afficher, **caractérisé en ce que**, dans le dispositif de commande de la matrice d'éclairage, un motif d'éclairage est associé à la classe des images à afficher et la matrice d'éclairage est commandée conformément au motif d'éclairage, et **en ce qu'**un dispositif de mesure de courant (30), relié au dispositif de commande (27) de la matrice d'éclairage (15), est prévu pour la détection de la consommation de puissance de la matrice d'éclairage (15) du dispositif d'affichage (5), dans lequel le dispositif de commande est réalisé sous la forme d'une source de courant réglable comportant des canaux de commande individuels pour chaque élément lumineux dans la matrice d'éclairage (15), et dans lequel le dispositif de commande est configuré pour, en fonction de la nécessité d'économiser de l'énergie électrique, réduire l'alimentation en énergie et la consommation d'énergie de la matrice d'éclairage en réduisant l'intensité d'éclairage absolue ou le nombre d'éléments d'éclairage en fonctionnement.

2. Dispositif d'affichage selon la revendication 1, **caractérisé en ce qu'**une classe d'images présente respectivement sensiblement les mêmes zones d'image sombres et/ou noires (12).

3. Dispositif d'affichage selon la revendication 2, **caractérisé en ce que**, au sein d'une classe d'images, au moins 70 %, en particulier 90 %, des surfaces noires coïncident d'une image à l'autre.

4. Dispositif d'affichage selon la revendication 1 ou l'une des revendications suivantes, **caractérisé en ce qu'**une classe d'images respective est associée à une application du dispositif d'affichage.

5. Dispositif d'affichage selon la revendication 4, **caractérisé en ce qu'**une pluralité d'applications est prévue, lesquelles correspondent respectivement à la représentation de différents instruments d'affichage (9, 10, 11) ou de combinaisons d'instruments d'affichage (9, 10, 11).

6. Dispositif d'affichage selon la revendication 1 ou l'une des revendications suivantes, **caractérisé par** un dispositif de mesure de température (29), qui est relié au dispositif de commande (27) de la matrice d'éclairage (15).

7. Procédé de commande d'un dispositif d'affichage selon la revendication 1 ou l'une des revendications suivantes, **caractérisé en ce que**, dans le dispositif de commande (27) de la matrice d'éclairage (15), un motif d'éclairage est associé à la classe des images à afficher et la matrice d'éclairage est commandée conformément audit motif d'éclairage, et **en ce que**, lors de la commande de la matrice d'éclairage (15), la consommation de puissance de la matrice d'éclairage (15) du dispositif d'affichage (5), détectée par le dispositif de mesure de courant (30), est prise en considération.

8. Procédé selon la revendication 7, **caractérisé en ce que**, lors de la commande de la matrice d'éclairage (15), la température détectée par le dispositif de mesure de température (29) est prise en considération.
